# EUROPEAN PATENT APPLICATION

(11) **EP 2 415 688 A1**
(43) Date of publication of application: **08.02.2012**
(21) Application number: 11176594.7
(22) Date of filing: 04.08.2011
(51) Int. Cl.: B65D 73/00, C09J 7/02, C09J 123/08, B65B 15/00, C08L 25/10

(54) **Heat sealing adhesive tape and consumer product display**

(30) Priority: 05.08.2010 JP 2010176574
(71) Applicant: ISHIDA CO., Ltd., Kyoto-shi, Kyoto 606 (JP)
(72) Inventor: Iwasaki, Yoshio, Shiga, 520-3026 (JP); Nakagawa, Emiko, Shiga, 520-3026 (JP)
(74) Representative: Skone James, Robert Edmund

(57) **Abstract**

The object of the present invention provides a heat sealing adhesive tape which can adhere to various kinds of products to be treated comprising various polymer materials as the outer surface thereof in a sufficient heat sealing adhesive strength, and enables retention of the adhesive property even under a high heat and humidity. The object is resolved by providing a heat sealing adhesive tape comprising a base layer and a sealant layer formed on at least one surface of the base layer, the sealant layer comprising a hot melt composition comprising an ethylene-vinyl acetate copolymer, a styrenic block copolymer, and a tackifier, the composition having a melting point of 85 °C or lower and a melt flow rate (MFR) of 15.0 g/10 min. or less measured at 190 °C under a load of 2,160g.

## Description

### CROSS REFERENCE TO THE RELATED APPLICATIONS

This application is based on and claims priority to Japanese application No. 2010-176574, filed on August 5, 2010, the entire disclosure of which is herein incorporated by reference as a part of this application.

### FIELD OF THE INVENTION

The present invention relates to a heat sealing adhesive tape used as a display strip for securing a plurality of packaging bags enclosing products, such as foods, at longitudinally spaced locations along the strip so as to exhibit the products for sale, also used as a banner on which a sales advertising, a coupon, or others is printed and which is attached on the outer surface of the bag, and still also used as a sealing member for sealing seam of a packaging bag containing powder or granular materials, such as foods (e.g., powders and sugars), feeds, fertilizers, and cement powders; and further relates to a consumer product display comprising the heat sealing adhesive tape and a plurality of packaging bags attached thereto at longitudinally spaced locations along the tape.

### BACKGROUND ART

In general, foods, such as snack foods, are individually packaged in a predetermined amount by using a Form-Fill-Seal Packaging Machine, and they are shipped to the stores. At the store, it is necessary to arrange the shipped products on the store shelves in order to exhibit the products for sale. In order to reduce this work burden as well as to use the shelf space more effectively, the attention has been attracted on a sales system of a hanging display in which packaging bags are attached to a strip (when used for this purpose, the strip is called as a display strip), so as to exhibit the packaging bags for sale. As the method for attaching packaging bags to a display strip, two systems have been known: one method comprises attaching packaging bags to a pressure-sensitive adhesive layer of a display strip at a normal temperature, the adhesive layer being formed by applying a pressure-sensitive adhesive agent to a base layer of the display strip, and the other method comprises attaching packaging bags to a resin layer (sealant layer) having heat sealing property formed on a base layer of a display strip by heat sealing. The former method for attaching the packaging bags to the pressure-sensitive adhesive layer of the display strip, however, has not been widespread because the adhesive layer on the surface of the display strip makes it difficult to pass through the working processes during the production of the display strip. In contrast, the latter display strip having the heat sealing resin layer does not have the above difficulty for working process, but when removing the bag from the display strip at the time of sale, the display strip has had a problem that a portion of the bag attached to the display strip by heat sealing was damaged.

With respect to the a bove-mentioned bag-damage problem, it has been known that there is a technology enabling removal of bags without damaging the surface of the bags while maintaining a sufficient adhesive strength of the bags when attached to the display strip, by using an ethylene-vinyl acetate copolymer as a resin having a heat sealing property (Patent Documents 1 to 3).

### PATENT DOCUMENT

[Patent Document 1] US Patent Publication No. 7011883
[Patent Document 2] JP Patent Publication No. 4551671
[Patent Document 3] US Patent Publication No. 7160595

The above-mentioned technology is useful and the strip has an adhesive property to a bag when the bag material is made of a biaxially-oriented polypropylene resin. The strip, however, does not have a sufficient adhesive property to the bag formed of materials other than polypropylene, such as biaxially-oriented nylon films and biaxially-oriented polyester films. In particular, there has been a problem that the adhesive property of the strip declined sharply in high heat and humidity even if the strip had an adhesive property at a room temperature.

Moreover, a tape on which a sales advertising, a coupon, or others is printed (sometimes called as a banner when used for this purpose) has recently been attached to a packaging bag from one end to the other end (usually from the upper end to the lower end) of the bag by heat sealing. However, the banner has had the same problem with the above display strip technology. Furthermore, the same is true of sealing members for sealing seam of a packaging bag containing powdery or granular materials, such as foods (e.g., powders and sugars), feeds, fertilizers, and cement powders.

Accordingly, the object to be solved by the present invention is to provide a heat sealing adhesive tape used as displa y strips, banners, or bag sealing members, which has a sufficient heat sealing property to bags even if the surface of the bags is formed from any material, especially from biaxially-oriented polyester films or biaxially-oriented nylon films, as well as to provide a heat sealing adhesive tape which can maintain the adhesive property to the bags not only under room temperature but under high heat and humidity.

### MEANS OF SOLVING THE OBJECT

The above object is solved by obtaining a heat sealing adhesive tape comprising a base layer and a sealant layer formed on at least one surface of the base layer, the sealant layer comprising a hot melt composition comprising an ethylene-vinyl acetate copolymer, a styrenic block copolymer, and a tackifier, the composition has a melting point of 85 °C or lower (preferably 80 °C or lower) and a melt flow rate (MFR) of 15.0 g/10 min. or less (preferably 10.0 g/10 min. or less) measured at a temperature of 190°C under a load of 2,160 g.

Hereafter, the melt flow rate may be abbreviated as MFR and the melt flow rate defined in the present invention shows the value measured at a temperature of 190 °C and under a load of 2,160 g in accordance with the method specified to JIS K 7210-1995.

In the present invention, a consumer product display is also included which comprises the above-mentioned heat sealing adhesive tape and a plurality of packaging bags comprising biaxially-oriented films, such as polyesters, nylons, or polypropylenes on their outer surfaces, and being attached to the heat sealing adhesive tape at longitudinally spaced locations along the tape.

In the heat sealing adhesive tape of the present invention, the ethylene-vinyl acetate copolymer is preferably a mixture of a non-crosslinked ethylene-vinyl acetate copolymer (a) and a crosslinked ethylene-vinyl acetate copolymer (b), and still preferably a mixture of a non-crosslinked ethylene-vinyl acetate copolymer (a) having an MFR of 100 g/10 min. or greater (temperature: 190 °C, load: 2,160 g) and a crosslinked ethylene-vinyl acetate copolymer (b) having an MFR of 1 g/10 min. or less (temperature: 190 °C, load: 2,160 g).

Moreover, the ethylene-vinyl acetate copolymer is preferably a mixture of 60 to 90 wt% of a non-crosslinked ethylene-vinyl acetate copolymer (a) and 40 to 10 wt% of the crosslinked ethylene-vinyl acetate copolymer (b).

In the heat sealing adhesive tape of the present invention, a pressure sensitive adhesive layer may be formed between the base layer and the sealant layer.

### EFFECT OF THE INVENTION

As for the heat sealing adhesive tape of the present invention, since the sealant layer is formed from a mixture of an ethylene-vinyl acetate copolymer and a styrenic block copolymer rather than an ethylene-vinyl acetate copolymer alone, the sealant layer has an excellent adhesive property to packaging bags formed from a biaxially-oriented film of various type of polymers, such as polyesters, nylons, and polypropylenes. Further, since the melting point of the composition which forms a sealant layer is 85 °C or lower, the sealant layer excels in heat sealing property. On the other hand, the sealant layer hardly flows under high temperatures because the MFR of the composition is 15.0 g/10 min. or less. As a result, the heat sealing adhesive tape excels in holding bags attached by heat sealing, especially exhibits the outstanding effects of maintaining adhesiveness to the bags or holding the bags even under high heat and humidity. Therefore, the heat sealing adhesive tape (display strip) to which the bags were attached can be conveyed to stores from producers under various environments.

Similarly, the heat sealing adhesive tape attached to a bag as a banner is also excellent in adhesiveness to the bag, and does not fall from the bag especially under high heat and humidity. Moreover, when used as a sealing member for sealing of seam in a bag, the seam of the bag remains sealed even under high heat and humidity.

In a preferable embodiment of the heat sealing adhesive tape of the present invention, the heat sealing adhesive tape comprises an ethylene-vinyl acetate copolymer being a mixture of a non-crosslinked copolymer and a crosslinked copolymer, especially a mixture of a copolymer which is easy to flow and has an MFR of 100 g/10 min. or greater, and a copolymer which is difficult to flow and has an MFR of 1 g/10 min. or less. T he heat sealing adhesive tape comprising such a mixture improves in heat sealing property and excels in adhesiveness to bags under high heat and humidity as a significant benefit.

### BRIEF DESCRIPTION OF THE DRAWINGS

Fig. 1 is a schematic view showing how to attach bags to a heat sealing adhesive tape (display strip).
Fig. 2 is a schematic side view showing a bag attached in the heat sealing adhesive tape of Fig. 1.

### DETAILED DESCRIPTION OF THE INVENTION

Heat Sealing Adhesive Tape) The heat sealing adhesive tape according to the present invention has a heat sealing property. In the practice of the present invention, the term "heat sealing property" referred to hereinabove and hereinafter is intended to mean that the heat sealing adhesive tape has an adhesive property to a material to be treated, such as a packaging bag, when the tape and the material are stacked, followed by heat and pressure are applied to them by means of a heating bar, a hot plate, a heating roll or the like.

When the heat sealing adhesive tape according to the present invention is used as a display strip, the configuration of the heat sealing adhesive tape is not limited to a specific one, as long as packaging bags are suitably attached to the heat sealing adhesive tape by heat sealing so that packaging bags enclosing products are secured to the tape to be displayed for sale. In many cases, the heat sealing adhesive tape is in the form of an elongate strip, has a sufficient length so that two or more bags can be attached thereto at longitudinally spaced locations, and also has a hanger hole in proximity to the top end of the tape for hanging. Moreover, when used as a banner, the heat sealing adhesive tape is attached to outer surface of a bag from one end through the other end, and the tape has a width to cover a part of the bag surface. Furthermore, the heat sealing adhesive tape for sealing seam of a bag has a predetermined width and length according to the size and weight of the bag to be sealed.

The heat sealing adhesive tape comprises a base layer and a sealant layer formed on at least one surface of the base layer, and the sealant layer comes to be molten by heat sealing to adhere to a material to be treated, such as a packaging bag.

### (Base layer)

Although the base layer is not limited to a specific one, the base layer preferably has a sufficient strength required to hang the heat sealing tape with many products and also offers resistance to high temperatures not to be fused or degraded at the time of heat sealing. Examples of the base layer include biaxially-oriented films, such as biaxially-oriented polypropylenes (OPP), biaxially-oriented polyethylene terephthatates (OPET), and biaxially-oriented nylons (ONY); metallic foils; papers; nonwoven fabrics; and textiles such as meshes or the laminated objects thereof. Among them, biaxially-oriented films are especially preferred.

Although the thickness of the above-mentioned base layer is not limited to a specific one when the heat sealing adhesive tape is used as a display strip, the thickness of the base layer is preferably within the range between 20 µm and 200 µm, and more preferably within the range between 30 µm and 80 µm. If the thickness of the base layer is less than 20 µm, the base layer may deteriorate in sufficient strength. As a result, the display strip comprising such a base layer may be damaged during the usage of the display strip or when a packaging bag is removed from the display strip. In contrast, if the thickness of the base layer exceeds 200 µm, the base layer may work as a heat insulating material, and the sealant layer may not be sufficiently heated at the time of heat sealing. When using the heat sealing adhesive tape of the present invention as a banner, the heat sealing adhesive tape may have a thickness of 20 µm or less. In such case, the thickness may be, for example, 5 µm or greater.

### (Sealant layer)

The heat sealing adhesive tape of the present invention comprises a sealant layer on at least one surface of a base layer, and may comprise sealant layers formed on each surface of the base layer. For example, when the tape is used for heat sealing seam of a bag, the tape with a sealant layer on one side is applicable for heat sealing the seam of the bag with the seam covered by the sealant layer from the outside. Alternatively, the tape with sealant layers on each side of the base layer is advantageously used for heat sealing seam of a bag with the tape sandwiched in between both sides of the seam.

In the heat sealing adhesive tape of the present invention, the sealant layer at least comprises an ethylene-vinyl acetate copolymer, a styrenic block copolymer, and a tackifier, in order to impart a heat sealing property to the tape. Conventionally as disclosed in Patent Documents 1 and 2, the heat sealing adhesive tape (display strip) was used which comprises a sealant layer consisting essentially of an ethylene-vinyl acetate copolymer and a tackifier. In the heat sealing adhesive tape of the present invention, however, the sealant layer is formed from a composition further comprising a styrenic block copolymer. The composition has a melting point of 85 °C or lower to impart a hot-melt property and achieve heat sealing under low temperatures, while the composition has an MFR of 15.0 g/10 min. or less to secure the bonding strength needed for holding bags under high heat and humidity.

It should be noted that, in the present invention, the term "hot-melt property" referred to hereinabove and hereinafter is intended to mean the characteristics that a composition (a hot melt composition) is in a solid state at ordinary temperature, but if it is heated, it becomes in a flow state by melting.

Although the thickness of the above-mentioned sealant layer is not limited to a specific one, the thickness of the sealant layer is preferably within the range between 3 µm and 100 µm, and more preferably within the range between 5 µm and 60 µm. If the thickness of the sealant layer is less than 3 µm, the sealant layer deteriorated in sufficient bonding strength. In contrast, if the thickness of the sealant layer exceeds 100 µm, the time required for heat sealing may be too long. In order to obtain sufficient adhesive strength and to attain appropriate heat sealing time, the optimal thickness is preferably 5 µm or greater and 60 µm or less.

### (Ethylene-vinyl acetate copolymer)

The percentage of vinyl acetate in the ethylene-vinyl acetate copolymer used in the present invention may be preferably within the range between 10 wt% and 40 wt%, and more preferably within the range between 20 wt% and 30 wt%. If the percentage of vinyl acetate is lower than 10 wt%, it may be difficult for the ethylene-vinyl acetate copolymer to acquire a low melting point. On the contrary, if the percentage of vinyl acetate is higher than 40 wt%, the adhesive property and bonding strength needed for holding bags under high temperature may be insufficient. Moreover, the above-mentioned ethylene-vinyl acetate copolymer may comprise an ethylene-vinyl acetate copolymer in which a part of vinyl acetate component is saponified. Furthermore, the ethylene-vinyl acetate copolymer may comprise an ethylene-vinyl acetate copolymer in which at least a part of functional group is modified with a carboxyl group.

In the present invention, since the composition constituting the sealant layer has a melting point of 85 °C or less and an MFR of 15.0 g/10 min. or less, it is necessary to choose suitably an ethylene-vinyl acetate copolymer having a suitable melting point and MFR depending on the required characteristics (melting point and MFR).

In the present invention, the ethylene-vinyl acetate copolymer is preferably a mixture of a non-crosslinked copolymer and a crosslinked copolymer. By mixing a crosslinked copolymer and a non-crosslinked copolymer, the force of the heat sealing adhesive tape (display strip) holding the bag attached thereto, especially the holding force under high heat and humidity, is enhanced. Preferable non-crosslinked copolymers have an MFR of 100 g/10 min. or greater, and preferable crosslinked copolymers have an MFR of 1 g/10 min. or less. With a blend of copolymers each having an extremely different MFR from each other, a heat sealing adhesive tape (display strip) can be obtained which makes possible to seal at a low temperature and has a bonding strength needed for holding bags under high heat and humidity.

The blend ratio of the non-crosslinked copolymer relative to the crosslinked copolymer can be selected by choosing appropriate value, and is preferably 60 to 90 wt% of the non-crosslinked copolymer relative to 40 to 10 wt% of the crosslinked copolymer, more preferably 65 to 85 wt% of the non-crosslinked copolymer relative to 35 to 15 wt% of the crosslinked copolymer. It should be noted that the non-crosslinked polymer and the crosslinked polymer may have the same vinyl acetate content, or may have different vinyl acetate contents from each other.

In the present invention, the method for obtaining a mixture of a non-crosslinked copolymer and a cross-linkage polymer may comprise: adding an organic peroxide to a non-crosslinked polymer, and kneading the mixture with an extruder. The organic peroxide is an ordinary initiator used for radical polymerization, and examples of the organic peroxide include benzoyl peroxide, 1,1-di-t-butyl peroxi-3,3,5-trimethylcyclohexane, t-butyl perbenzoate, di-t-butyl peroxide, dicumyl peroxide, and others. By adding the above-exemplified organic peroxide at an amount of about 0.05 wt% to 5 wt% to the non-crosslinked polymer and mixing the resultant, a mixture comprising the non-crosslinked copolymer and the crosslinked copolymer can be obtained. When evaluating whether the mixture has a predetermined blend ratio and whether each of the non-crosslinked and crosslinked polymers has a predetermined MFR, the obtained mixed composition is immersed in a suitable solvent, for example, methyl ethyl ketone to separate a soluble matter (non-crosslinked copolymer) from an insoluble matter (crosslinked copolymer), and then MFRs of the non-crosslinked and crosslinked copolymer can be measured, respectively. It should be noted that in the present invention the cross-linkage state in the crosslinked copolymer means that the crosslinked copolymer is insoluble in solvent but is still able to retain heat flow property.

### (Styrenic block copolymer)

As a styrenic block copolymer constituting a sealant layer, a block copolymer formed from a styrenic monomer, such as styrene and α-methyl styrene, and a conjugation diene, such as butadiene and isoprene, or its hydrogenated material can be used. More specifically, examples of the styrenic block copolymer include styrene-butadiene block copolymers, styrene-isoprene block copolymers, styrene-ethylene-butene block copolymers (hydrogenated styrene-butadiene block copolymers), styrene-ethylene-propylene block copolymers (hydrogenated styrene-isoprene block copolymers), and others. For example, a block copolymer formed from 10 mol% to 60 mol% of styrenic monomer and 90 mol% to 40 mol% of conjugated diene, or a hydrogenated material thereof can be preferably used. The compositional ratio, molecular weight, viscosity, or others of these styrenic block polymers can be arbitrarily chosen from a wide range. In the present invention, by adding the above-mentioned styrenic block copolymer to an ethylene-vinyl acetate copolymer a heat sealing adhesive tape (display strip) can be obtained which is capable of adhering to any packaging bag comprising an outer surface formed from a biaxially-oriented film of various kinds of polymer materials, such as polyesters, nylons, heat-sealable polypropylenes, and others.

### (Tackifier)

The type of tackifiers constituting a sealant layer is not limited to a specific one, and examples of the tackifiers preferably used include at least one resin selected from the group consisting of a rosin resin, a xylene resin, a terpene resin, an aliphatic hydrocarbon resin, an alicyclic hydrocarbon resin, and an aromatic hydrocarbon resin.

As the above-mentioned rosin resin, there may be mentioned, for example, rosins, rosin esters, gum rosins, hydrogenated rosins, polymerized rosins, and glycerol esters of natural rosins, glycerol esters of modified rosins, pentaerythritol esters of natural rosins, pentaerythritol esters of modified rosins, glycerol esters of hydrogenated rosins, glycerol esters of polymerized rosins, and the like. Examples of the xylene resins include alkyl phenol-modified xylene resins, rosin-modified xylene resins, and the like. As the above-mentioned terpene resin, there may be mentioned, for example, terpenes, phenolic terpenes, modified terpenes, α-pinene polymers, β-pinene polymers, dipentene polymers, terpene-phenol copolymers, and the like. As the above-mentioned aliphatic hydrocarbon resins, there may be mentioned, for example, polymers formed from a mono- or di-olefin having 4 to 5 carbon atoms, such as 1-butene, isobutylene, butadiene, 1,3-pentadiene as a major monomer component. As the above-mentioned alicyclic hydrocarbon resin, there may be mentioned, for example, resins obtainable by polymerization of a cyclic monomer obtained by cyclizing and dimerizing diene components of the spent C4 to C5 fraction, resins obtained by polymerization of a cyclic monomer such as cyclopentadiene, hydrogenated dicyclopentadiene resins, hydrogenated petroleum resins, and the like. As the above-mentioned aromatic hydrocarbon resin, there may be mentioned, for example, polymers of vinyl toluene, polymers of indene, polymers of styrene, polymers of α-methyl-styrene, and others. The above-mentioned sealant layer may contain a wax in order to improve workability, adjust the adhesion, and others.

### (Composition for sealant layer)

As the suitable ranges of the blend rate of the ethylene-vinyl acetate copolymer (X), the styrenic block copolymer (Y), and the tackifier (Z) all of which constitute the sealant layer of the heat sealing adhesive tape of the present invention, there may be mentioned 50 wt% to 85 wt% (more preferably 60 wt% to 80 wt%) of the ethylene-vinyl acetate copolymer, 8 wt% to 30 wt% (more preferably 10 wt% to 20 wt%) of the styrenic block copolymer, and 10 wt% to 30 wt% (more preferably 13 wt% to 20 wt%) of the tackifier (X + Y + Z = 100 wt%).

If needed, the above-mentioned sealant layer may further contain an one or more additives usually used, such as UV inhibitors, antioxidants, plasticizers, lubricants, pigments, and colorants.

In the heat sealing adhesive tape of the present invention, the above-mentioned sealant layer may be formed on substantially whole surface thereof, may be formed like a striped pattern, or may be formed only on the predetermined position for products to be attached. When the sealant layer is formed on substantially whole surfaces of the heat sealing adhesive tape, the heat sealing adhesive tape can be advantageously used because it can adhere to materials to be treated, such as packaging bags, at any position of the tape. It should be noted that the term "'substantially whole surface" means that it excludes portion(s) to be used for forming a hanger hole as well as peripheral parts to which materials to be treated, such as packaged objects, are not adhered.

### (Formation of sealant layer)

A sealant layer is obtained by kneading each of the above-mentioned components simultaneously or in arbitrary order. The kneading method is arbitrary selected, and there may be adopted, for example, a kneading method under a mechanical mixing condition with the use of an extruder, an open roll mill, a Banbury mixer, a kneader, a kneader-ruder, a kneading chamber, and the like; a kneading and extruding method with the use of two or more kneading means such as an extruder or a hot-melt applicator.

When using an ethylene-vinyl acetate copolymer, a non-crosslinked ethylene-vinyl acetate copolymer may be supplied with an organic peroxide to an extruder in advance, and then the resultant may be hot-mixed to obtain a mixture of the non-crosslinked copolymer and a crosslinked copolymer. The mixture may be supplied to an extruder with a styrenic block copolymer and a tackifier, so as to obtain a composition for the sealant layer relating to the present invention.

Moreover, not only a mixture of the non-crosslinked copolymer and a crosslinked copolymer but also the sealant composition relating to the present invention comprising the above-mentioned components may be obtained, by adding a non-crosslinked ethylene-vinyl acetate copolymer and an organic peroxide to an extruder with a styrenic block copolymer and a tackifier, followed by kneading the resultant by means of the extruder. In the latter case, when evaluating whether the mixture comprises a desired crosslinked polymer, the obtained sealant composition may be separated with the use of a suitable solvent to extract ethylene-vinyl acetate copolymers, and the extracted copolymers may be separated into the non-crosslinked polymer and the crosslinked copolymer.

### (Laminating of base layer and sealant layer)

The heat sealing adhesive tape of the present invention can be obtained by integrally laminating the above-mentioned base layer to the above-mentioned sealant layer. The integral lamination of the base layer and the sealant layer may be accomplished by the following methods:
- after activation processing of the surface of the base layer film by corona-discharge processing etc., laminating the sealant layer film to the activated surface of the base layer,
- extrusion coating of a molten composition for the sealant layer onto the base layer,
- laminating the base layer and the sealant layer via a molten polyethylene, or
- laminating the sealant layer film on the base layer treated with a urethane adhesive agent.

### (Adhesive layer)

In a modified embodiment of the heat sealing adhesive tape of the present invention, a pressure-sensitive adhesive layer may be formed between the above-mentioned sealant layer and the above-mentioned base layer. In some cases, there is a demand to put a packaging bag removed from the display strip by a customer back to the original place thereof. In order to comply with such a demand, the heat sealing adhesive tape (display strip) may comprise a pressure-sensitive adhesive layer between the sealant layer and the base layer. When a bag is removed from the heat sealing adhesive tape (display strip), a portion of the sealant layer is removed from the display strip with the removed bag, and then the adhesive layer is exposed from the portion where the sealant layer is removed. Then the removed bag may be re-attached to the adhesive layer of the heat sealing adhesive tape. The type of adhesive agents to be used for the adhesive layer is not limited to a specific one as long as the agents have an adhesive property at ordinary temperatures, and the adhesive layer may be preferably formed with the use of rubber based adhesive agents, acrylic adhesive agents, and others. It should be noted that the term "pressure-sensitive adhesive agent" referred to hereinabove and hereinafter is intended to mean ordinary pressure-sensitive adhesive agents being capable of removably adhering two adherends, such as a tape and a packaging bag, and others.

The thickness of the adhesive layer is not limited to a specific one, and the adhesive layer preferably has a thickness within the range between 10 µm and 300 µm, more preferably between 20 µm and 100 µm. The adhesive layer having a thickness of less than 10 µm may be removed with the above-mentioned heat sealing layer when the attached bag is removed from the display strip, and may make it difficult to attach the removed bag to the strip again. On the other hand, even if the thickness of the adhesive layer exceeds 300 µm, the effectiveness of an adhesive layer will not be improved.

### (Silicone treatment)

The heat sealing adhesive tape (display strip) comprising the above-mentioned adhesive layer preferably comprises an agent for silicone treatment (silicone release agent) between the upper sealant layer and the lower adhesive layer so that the upper sealant layer is easily released from the lower adhesive layer when removing a bag. The type of the agents for silicone treatment is not limited to a specific one, and silicone treatment is conducted by applying to the adhesive layer surface a commercially available silicone release agent or others used for application requiring a mold release characteristics.

### (Packaging bag)

As a packaging bag to be attached to the heat sealing adhesive tape (display strip) of the present invention or to be attached to the heat sealing adhesive tape (banner) of the present invention, there may be mentioned packaging bags attachable by heat sealing and which comprises a plastic film at least on their outer surface. Since the heat sealing adhesive tape of the present invention has an adhesive property to any materials, the outer surface of the bags may be formed from biaxially-oriented films, such as not only heat-sealable biaxially-oriented polypropylene films but biaxially-oriented nylon films, biaxially-oriented polyester films, and others. Regardless of the material constituting the outer surface of the bags, these bags can be attached to the heat sealing adhesive tape (display strip) of the present invention by heat sealing. Moreover, even if the heat sealing adhesive tape (display strip) to which the bags were attached is placed under high heat and humidity (such as, for example, 40 °C and 90%), the adhesive property of the tape is maintainable. Furthermore, regardless of the material constituting the outer surface of the bags, the heat sealing adhesive tape (banner) of the present invention can be attached to these bags by heat sealing, and the adhesive property of the tape is maintainable even under high heat and humidity (e.g., 40 °C and 90%). Further again, the seam of the bag can be sealed with the use of the heat sealing adhesive tape of the present invention.

### (Multilayer structure of packaging bag)

The layer composition of packaging bags to be attached to the heat sealing adhesive tape of the present invention is not limited to a specific one, and packaging bags having various kinds of multilayer structure can be attached to the heat sealing adhesive tape. Examples of multilayer structure include:
- a layer composition comprising a biaxially-oriented polyethylene terephthalate (OPET) layer/ a printing layer/ an aluminum deposited cast polypropylene (VM-CPP) layer;
- a layer composition comprising a biaxially-oriented nylon (ONY) layer/ a printing layer/ a polyethylene (PE) layer/ an aluminum deposited cast polypropylene (VM-CPP) layer;
- a layer composition comprising a heat scalable biaxially-oriented polypropylene (HS-OPP) layer/ a printing layer/ an adhesive layer/ a polyethylene (PE) layer/ an aluminum deposited cast polyethylene terephthalate (VM-PET) layer/ a polyethylene (PE) layer/ a cast polypropylene (CPP) layer;
- a layer composition comprising a heat-sealable biaxially-oriented polypropylene (HS-OPP) layer/ a printing layer/ an aluminum deposited cast polypropylene (VM-CPP) layer;
- a layer composition comprising a heat-sealable biaxially-oriented polypropylene (HS-OPP) layer/ a printing layer/ a polyethylene (PE) layer/ an aluminum deposited cast polypropylene (VM-CPP) layer;
- a layer composition comprising a heat-sealable biaxially-oriented polypropylene (HS-OPP) layer/ a printing layer/ a polyethylene (PE) layer/ an aluminum deposited heat-sealable biaxially-oriented polypropylene (VM-HS-OPP) layer;
- a layer composition comprising a heat-sealable biaxially-oriented polypropylene (HS-OPP) layer/ a printing layer/ an adhesive layer/ a polyethylene (PE) layer/ an aluminum deposited cast polypropylene (VM-CPP) layer; and other multilayer structures.

### (Attachment of bags to heat sealing adhesive tape)

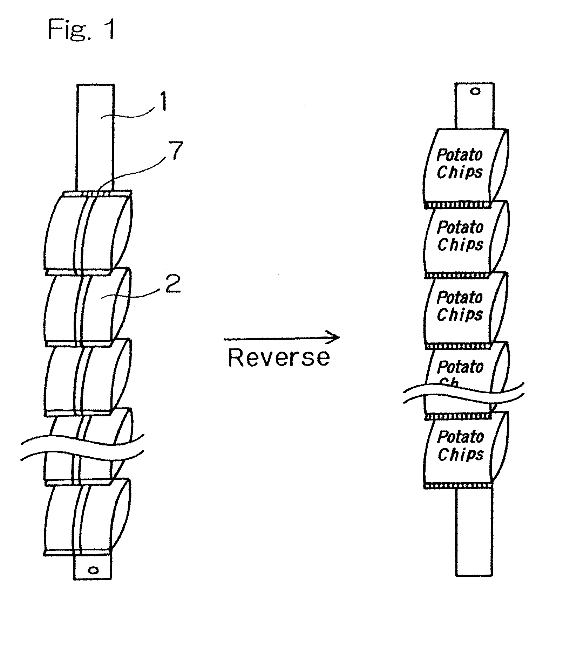

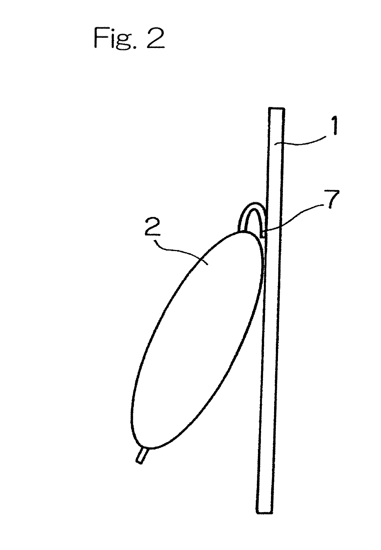

There is no limitation of the method for producing a consumer product display of the present invention and the method comprises heat sealing the heat sealing adhesive tape of the present invention and bags in which the product is enclosed, and the preferable method includes, for example, a method for attaching bags to the heat sealing adhesive tape in accordance with the procedure shown in Fig. 1. According to this method, bags 2 in which a product is enclosed are first placed so as to allow the front surface of the bags 2 in contact with a heat sealing adhesive tape (display strip) 1, subsequently the upper parts of the bags 2 are each heat sealed to be attached to the heat sealing adhesive tape (display strip) 1 (Fig. 1, left). Examples of the products to be enclosed in the bag 2 include snack foods, candies, and others, and the product is not limited to the above examples. After attaching the bags 2 containing the predetermined amount of products to the heat sealing adhesive tape (display strip) 1, the bags 2 are twisted upside down (reversed) around the heat-sealed parts as the axis so that the front surface of the bag 2 is on the opposite side of the heat sealing adhesive tape (display strip) 1 (Fig. 1, right). When one end of the heat sealing adhesive tape (display strip) 1 is hung on a hook or the like to exhibit the bags 2, since the bonding parts 7 of the bags 2 and the heat sealing adhesive tape (display strip) 1 are in the state described in Fig. 2, each of the bags can be easily removed from the heat sealing adhesive tape (display strip) with little force by pulling the bag 2 downward.

Alternatively, bags may be attached to the heat sealing adhesive tape (display strip) by allowing the upper part of the reverse surface of the bags to be attached to the predetermined position of the tape. In such a case, the heat sealing adhesive tape (display strip) can be directly hanged without twisting upside down as stated above.

A bag in which a product is enclosed can be attached to the heat sealing adhesive tape (display strip) of the present invention by placing the heat sealing adhesive tape (display strip) and the bag (edge part of the bag) on the heating plate heated to a predetermined temperature, and applying a pressure on them from above. There is a dedicated device available from ISHIDA Co., Ltd. under the trade name of "F-SPA". The heating temperature, heating time, and heating pressure are suitably decided and the heating conditions are preferably within the heating temperature of 130 °C to 190 °C (more preferably 140 °C to 180 °C), within the heating time of 100 msec. to 1,000 msec. (more preferably 150 msec. to 500 msec.), and within the heating pressure of 1 kg/cm² to 8 kg/cm² (more preferably 2 kg/cm² to 6 kg/cm²). Although the sealant composition according to the present invention has a low melting point and a high MFR, the heat sealing adhesive tape can have a high adhesive strength and an improved retention of bags by heat sealing under a pressure.

Moreover, as for the attachment of the heat sealing adhesive tape (banner) of the present invention to bags, the heat sealing adhesive tape (banner) may be attached as described in, for example, JP Laid-Open Patent Publication No. 2002-80008. The heat sealing adhesive tape is supplied to the former surface of a Form-Fill-Seal Packaging Machine by placing the heat sealing adhesive tape on a packaging film, and then the heat sealing adhesive tape is heat sealed with the upper and lower portions of the bag when the upper and lower portions of the bag are heat sealed. As a result, the heat sealing adhesive tape can be attached to the both upper and lower portions of the bag.

### (Transportation of heat sealing adhesive tape with packaging bags)

The heat sealing adhesive tape (display strip) with packaging bags are conveyed to a store to exhibit products for sale. The heat sealing adhesive tape (display strip) of the present invention has the advantage that the adhesive property is not deteriorated even under a harsh environment of a high temperature and high humidity (40 °C, 90%) when shipping or transporting.

### EXAMPLES

Hereinafter, with respect to the case where the heat sealing adhesive tape of the present invention is used as a display strip, the present invention will be demonstrated by way of some examples that are presented only for the sake of illustration, which are not to be construed as limiting the scope of the present invention.

### [Example 1 and Comparative Examples 1 to 2]

Display strips were produced according to the specification described below, and the packaging bags of the following specification were attached to each of the produced display strips by heat sealing in accordance with the following conditions. Then, the adhesive property of each of the display strips was evaluated. It should be noted that the melt flow rate (MFR) is a value measured at 190 °C and under a load of 2,160 g.

### (Production of display strip)

A biaxially-oriented polyethylene terephthalate film (thickness: 50 µm) was used as a base layer, and one of the surface of the PET film was treated by corona-discharge processing. Then, on the treated surface of the PET film, a film (thickness: 35 µm) formed from the following composition was laminated as a sealant layer to produce a display strip having a width of 35 mm.

### [Strip A (Example 1)]

Composition of the sealant layer:
- (A) 70 wt% of ethylene-vinyl acetate copolymer having 25 wt% of vinyl acetate [the copolymer is a mixture of 75 wt% of the non-crosslinked copolymer (a) having an MFR of 250 g/10 min., and 25 wt% of the crosslinked copolymer (b) having an MFR of 0.3 g/10 min. (wherein (a) + (b) = 100 wt %)];
- (B) 13 wt% of a styrene butadiene based block copolymer; and
- (C) 17 wt% of a petroleum-resin type tackifier
(wherein A + B + C = 100 wt %).

The physical properties of the sealant layer film: melting point of 74 °C, MFR of 7.8 g / 10 min.

### [Strip B (Comparative Example 1)]

Composition of the sealant layer:
- (A) 83 wt% of a mixture comprising a non-crosslinked ethylene-vinyl acetate copolymer having 28 wt% of vinyl acetate and a crosslinked ethylene-vinyl acetate copolymer having 15 wt% of vinyl acetate; and
- (B) 17 wt% of a petroleum-resin type tackifier
(wherein A + B = 100 wt %).

The physical properties of the sealant layer film: melting point of 104 °C, MFR of 20 g / 10 min.

### [Strip C (Comparative Example 2)]

Composition of the sealant layer:
- (A) 83 wt% of a non-crosslinked ethylene-vinyl acetate copolymer having 17 wt% of vinyl acetate; and
- (B) 17 wt% of a petroleum-resin type tackifier

The physical properties of the sealant layer film: melting point of 83 °C, MFR of 15 g / 10 min.

### (Specification of packaging bag)

The packaging bag (width: 13cm) of the following specification was used.
- Bag 1: The outer layer of a packaging bag is formed from a biaxially-oriented polyethylene terephthalate film (thickness: 18 µm).
- Bag 2: The outer layer of a packaging bag is formed from a biaxially-oriented nylon film (thickness: 15 µm).
- Bag 3: The outer layer of a packaging bag is formed from a heat-sealable biaxially-oriented polypropylene film (thickness: 20 µm).

### (Heat sealing conditions)

The upper portion of a packaging bag was attached to each of the display strips in the following conditions by using an F-SPA machine produced by ISHIDA Co., Ltd.

Heat sealing temperature and time: 160 °C, 300 msec.

Heat sealing pressure: 3 kg/cm²

Heat sealing area: Length of 10 mm x width of 30 mm

### (Evaluation of adhesive property)

### (1) Measurement of heat seal strength

The heat seal strength between the display strip and the bag attached to the strip was measured at a room temperature (23 °C) using a tensile strength tester ("Strograph VI-C" produced by Toyo Seiki Seisaku-sho, Ltd.) by holding the display strip and the packaging bag with each of the two clamps of the tester, in which the interior distance between two clamps was 20 cm, followed by separating the clamps at the tension rate of 300 mm/min.

### (2) Retention of bags under room temperature or high heat and humidity

The display strips with a packaging bag (100 g load) were each left with the strip being hanged under a room temperature (23 °C) or under a hot temperature and high humidity (temperature of 40 °C and humidity of 90% RH) for two weeks to observe whether the display strip could hold the bag. The bags were hung in accordance with the embodiment shown in Fig. 2.

### (Results of heat seal strength measurement)

| (1) Adhesive property of Strips to Bag 1 | | |
|---|---|---|
| Example 1 | Strip A | 22.9 N/30 mm |
| Comparative Example 1 | Strip B | 14.2 N/30 mm |
| Comparative Example 2 | Strip C | 1.2 N/30 mm |

| (2) Adhesive property of Strips to Bag 2 | | |
|---|---|---|
| Example 1 | Strip A | 23.5 N/30 mm |
| Comparative Example 1 | Strip B | 14.2 N/30 mm |
| Comparative Example 2 | Strip C | 1.6 N/30 mm |

| (3) Adhesive property of Strips to Bag 3 | | |
|---|---|---|
| Example 1 | Strip A | 19.0 N/30 mm |
| Comparative Example 1 | Strip B | 8.8 N/30 mm |
| Comparative Example 2 | Strip C | 15.0 N/30 mm |

### (Evaluation of bag-retention property of strip)

### (1) Room temperature (23 °C)

- In the case of Bag 1

| | | |
|---|---|---|
| Example 1 | Strip A | The bag is retained during two-week hanging. |
| Comparative Example 1 | Strip B | Same as the above |

- In the case of Bag 2

| | |
|---|---|
| Example 1 | Strip A The bag is retained during two-week hanging. |
| Comparative Example 1 | Strip B Same as the above |

### (2) Hot-temperature (40 °C) and high humidity (90% RH)

- In the case of Bag 1

| | | |
|---|---|---|
| Example 1 | Strip A | The bag is retained during two-week hanging. |
| Comparative Example 1 | Strip B | The bag fell within 30 minutes after hanging. |

- In the case of Bag 2

| | | |
|---|---|---|
| Example 1 | Strip A | The bag is retained during two-week hanging. |
| Comparative Example 1 | Strip B | The bag fell within 1 hour after hanging. |

It is clear from the above results that the display strip (strip A) of the present invention has an excellent adhesive property to either of packaging bags in which the outer layer of the bags was formed from any of the biaxially oriented polyester, nylon, and polypropylene film. The display strip of the present invention achieves not only an excellent adhesive property but also smooth release of the attached bag from the strip, without damaging the outer surface of the bag.

In contrast, the strips B and C of Comparative Examples had inferior adhesive property as compared with the strip A, in particular the strip C hardly showed the adhesive property. Accordingly, the excellence of the adhesive property of the display strip concerning the present invention is clearly shown.

Moreover, the display strip (strip A) of the present invention held the bag even under the high heat and humidity, whereas the display strip (strip B) does not have such bag-retention property. Accordingly, the strip B is subject to the restriction of the environment during a storage and transportation period from attaching the bag to the display strip to displaying in a store. In contrast, the display strip according to the present invention is not subject to such restriction.

[Example 2] The display strip of the following specification was produced, and the packaging bag of the following specification was attached to the display strip by heat sealing in the following condition, and the adhesive property of the display strip was evaluated.

(Production of display strip)
(1) A biaxially-oriented polyethylene terephthalate film (thickness: 50 µm) was used as a base layer. A solution of a polyurethane-based primer dissolved in toluene was applied to one surface of the polyethylene terephthalate film, and then dried to form a coat layer having a thickness of 0.8 µm. On this coat layer, the natural rubber based adhesive compound was applied to form an adhesive layer with a thickness of 35 µm.
(2) A silicone based remover was applied on the same sealant layer film (thickness: 35 µm) as Example 1 so that the thickness of the remover layer was 0.05 g/m².
(3) The adhesive layer formed on the above-mentioned base layer film was secured to the silicone based remover layer formed on the back surface of the sealant layer film. Then slits were formed at intervals of 3 mm only to the sealant layer film in the transverse direction to the longitudinal direction of the film. The resultant was cut along the longitudinal direction into strips of 35 mm in width to obtain a display strip of Example 2.

### [Comparative Example 3]

(1) The adhesive layer (thickness: 35 µm) was formed on the base layer film in the same way as Example 2.
(2) Instead of the sealant layer film (the same sealant layer film as Example 1) of the display strip in Example 2, a sheet of low-density polyethylene film (LLDPE) (thickness: 35 µm) was used, and the silicone remover was applied to one surface of this LLDPE film in the same way as Example 2.
(3) The adhesive layer formed on the above-mentioned base layer film was secured to the silicone remover layer formed on the back surface of the sealant layer film in the same way as Example 2. Then slits were formed at intervals of 3 mm only to the sealant layer film in the transverse direction to the longitudinal direction of the film. The resultant was cut along the longitudinal direction into strips of 35 mm in width to obtain a display strip of Comparative Example 3.

(Evaluation of adhesive property) With the use of the same packaging bags as the packaging bags used in Example 1, the packaging bags were each attached to the display strips of Example 2 and Comparative Example 3 on the same heat sealing conditions as Example 1, and the adhesive property of the display strips of Example 2 and Comparative Example 3 was evaluated. The result was shown in Table 1.

| Packaging bag | Example 2 | Comparative Example 3 |
|---|---|---|
| Bag 1 | 13.2 N/30 mm | Not attached |
| Bag 2 | 14.8 N/30 mm | Not attached |
| Bag 3 | 13.5 N/30 mm | 12.9 N/30 mm |

As clearly shown from the results in Table 1, the display strip of the present invention showed excellent adhesive property to any of bags 1 to 3. However, the conventional display strip (Comparative Example 3) only adhered to the bag 3 (heat-sealable biaxially-oriented polypropylene), but did not adhere to the bags 1 and 2.

Moreover, after the packaging bag was attached to the display strip of Example 2 to obtain a consumer product display, the bag was removed from the display strip. The bag was separated from the display strip with only a part of the sealant layer film being adhered to the bag, and thereby the adhesive layer was exposed on the removed part (sealant layer) of the display strip. As a result. it was possible for the bag to be re-attached to the display strip.

[Example 3]
(1) A biaxially-oriented polyethylene terephthalate film (thickness: 12 µm) was prepared, and one of the surface of the PET film was treated by corona-discharge processing. Then, on the treated surface of the PET film, a film (thickness: 25 µm) formed from the same composition as Example 1 was laminated as a sealant layer to produce a banner having a width of 35 mm.
(2) While supplying thus obtained banner and a packaging film [comprising a polyethylene terephthalate film (thickness: 18 µm) as the outer layer] to a Form-Fill-Seal Packaging Machine [under the trade name of "ATLAS" produced by ISHIDA Co., Ltd.] with a banner supply device, the packaging film was formed into a tubular shape and the banner was overlapped on the tubular film in a predetermined longitudinal position of the tubular film, then the tubular film with the banner was subject to lateral sealing and cutting so as to seal the upper and lower portions of the bag as well as to attach the banner to the upper and lower portions of the bag to obtain a packaging bag (width: 13.5 cm, length: 19 cm) with the banner in the right side relative to the transverse direction of the packaging bag.
(3) With respect to the above-mentioned packaging bag with the banner attached thereto, the heat seal strength between the banner and the bag was measured in the same condition with Example 1, and the measurement revealed that the heat seal strength of the banner was 12 N/35 mm.

### INDUSTRIAL APPLICABILITY

When using the heat sealing adhesive tape of the present invention as a display strip, the display strip has the outstanding characteristics of having a bag-retention property under heat and high humidity while having an excellent heat sealing property to any of packaging bags formed from various materials. Accordingly, the display strip is effective to exhibit not only food-packaging bags but also packaging bags of various products for sale, and has availability in large industrial fields, such as the food industry, the packaging industry, and the product distribution industry.

Moreover, when using the heat sealing adhesive tape of the present invention as a banner, the banner can be attached to the outer surface of the packaging bag formed from various kinds of materials. Further, since the heat sealing adhesive tape of the present invention can be used as a sealant for sealing seam of packaging bags, the heat sealing adhesive tape of the present invention is also applicable in the above-mentioned large industrial fields.

Furthermore, when laminating polymer sheets or molded articles by heat sealing, the heat sealing adhesive tape of the present invention can be used for adhering or laminating layers of the polymer sheets or molded articles by placing the heat sealing adhesive tape between the sheets or between molded articles. Moreover, the heat sealing adhesive tape of the present invention can also be used as a heat sealing adhesive tape in the electric-materials field.

As mentioned above, the preferred embodiments of the present invention are illustrated, but it is to be understood that the invention includes variations and modifications obvious to a person skilled in the field referring to the specification of the present invention. Accordingly, all such variations and modifications are intended to be included within the scope of the invention as defined in the appended claims.

### LIST OF REFERENCE NUMERALS

- 1: heat sealing adhesive tape (display strip)
- 2: bag
- 7: bonding part

## Claims

1. A heat sealing adhesive tape comprising
a base layer and
a sealant layer formed on at least one surface of the base layer,
the sealant layer comprising a hot melt composition comprising an ethylene-vinyl acetate copolymer, a styrenic block copolymer, and a tackifier,
the composition having a melting point of 85 °C or lower and a melt flow rate (MFR) of 15.0 g/10 min. or less measured at a temperature of 190 °C under a load of 2, 160 g.

2. The heat sealing adhesive tape as claimed in claim 1, wherein the ethylene-vinyl acetate copolymer is a mixture of a non-crosslinked ethylene-vinyl acetate copolymer (a) and a crosslinked ethylene-vinyl acetate copolymer (b).

3. The heat sealing adhesive tape as claimed in claim 1 or 2, wherein the ethylene-vinyl acetate copolymer is a mixture of a non-crosslinked ethylene-vinyl acetate copolymer (a) having an MFR of 100 g/10 min. or greater measured at a temperature of 190 °C under a load of 2,160 g and a crosslinked ethylene-vinyl acetate copolymer (b) having an MFR of 1 g/10 min. or less measured at a temperature of 190 °C under a load of 2, 160 g

4. The heat sealing adhesive tape as claimed in claim 2 or 3, wherein the ethylene-vinyl acetate copolymer is a mixture of 60 to 90 wt% of the non-crosslinked ethylene-vinyl acetate copolymer (a) and 40 to 10 wt% of the crosslinked ethylene-vinyl acetate copolymer (b).

5. The heat sealing adhesive tape as claimed in any of claims I to 4, wherein a pressure-sensitive adhesive layer is formed between the base layer and the sealant layer.

6. A consumer product display comprising
a heat sealing adhesive tape as recited in claim 1, and
a plurality of packaging bags being attached to the heat sealing adhesive tape at longitudinally spaced locations along the strip, and each comprising a biaxially-oriented film as the outer layer.
